Europäisches Patentamt

European Patent Office

Office européen des brevets

(19)

(11) Publication number : **0 505 127 A2**

# EUROPEAN PATENT APPLICATION

(21) Application number : 92302247.9

(22) Date of filing : 16.03.92

(51) Int. Cl.⁵ : **G11B 20/18, G11B 27/36, G11B 20/10, // G11B20/12**

(30) Priority : **17.03.91 JP 76788/91**

(43) Date of publication of application :
**23.09.92 Bulletin 92/39**

(84) Designated Contracting States :
**DE FR GB**

(71) Applicant : **SONY CORPORATION**
**7-35 Kitashinagawa 6-chome Shinagawa-ku**
**Tokyo 141 (JP)**

(72) Inventor : **Okihara, Daijiro, c/o Patents Division**
**Sony Corporation, 6-7-35 Kitashinagawa**
**Shinagawa-ku, Tokyo 141 (JP)**

(74) Representative : **Pilch, Adam John Michael et**
**al**
**D. YOUNG & CO. 10 Staple Inn**
**London WC1V 7RD (GB)**

(54) **Data recording methods and apparatus.**

(57)    A data recording apparatus records (13) data
(REC) with block numbers (BLNO) assigned
successively in predetermined blocks (DB) on a
recording medium (1), and then records pre-
determined final data (EORT) in succession on
the recording medium (1). Reproduced data
(RAW) obtained by concurrent reproduction of
said recording medium (1) is monitored (51) for
errors in the reproduced data during recording
of the predetermined final data (EORT). When
an error is detected (WER), the recording data
(REC) and the final data (EORT) are succes-
sively recorded again. Thus the apparatus is
capable of enhancing the bit error rate signific-
antly.

FIG. 10

EP 0 505 127 A2

This invention relates to data recording methods and apparatus which may be suitable for use as a computer external memory.

In a magnetic tape recording and reproducing apparatus of this kind, one proposal is the so-called ID-1 format data recorder (ANSI x 3.175-1990 19mm Type ID-1 Recorded Instrumentation), wherein recording tracks are formed obliquely in sequence on a magnetic tape, and thus desired data can be recorded and reproduced at high density.

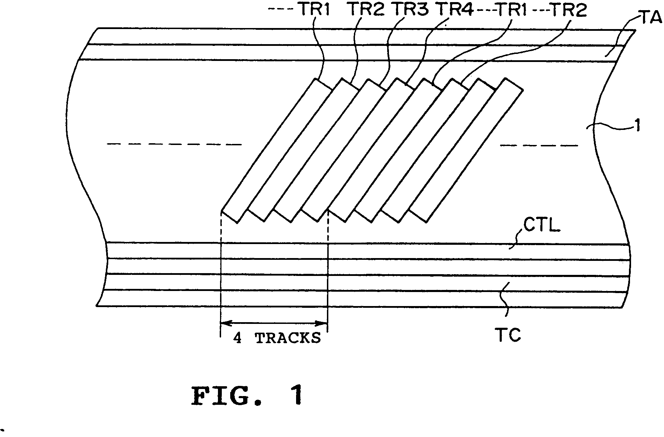

In such a data recorder, as shown in Figure 1 of the accompanying drawings, a magnetic tape 1 is wound about a rotary drum (not shown) rotating at a predetermined speed, the magnetic tape 1 is run at a predetermined speed thereby forming recording tracks TR (...TR1, TR2, TR3, TR4, TR1, TR2, ...) obliquely in sequence by a magnetic head mounted on the rotary drum, and thus desired data is recorded on the recording tracks TR.

The data recorder also forms recording tracks TA, CTL and TC extending longitudinally on both upper and lower edges of the magnetic tape 1, and a track set identifier (ID) of the recording tracks TR is recorded on the recording track CTL.

The track set ID may be absolute position information beginning from the start of the magnetic tape 1, inserted between predetermined synchronising signals, and recorded at a 4-track period with reference to the recording tracks TR.

The recording tracks TA and TC are available for recording the user's controlling data and the like, thus data recorded at high density on the recording tracks TR can be searched simply by reproducing the recording tracks TA, CTL and TC.

When recording data on the recording tracks TR, an error detecting/correcting parity code comprising a so-called product code may be applied to record the data concerned, thereby providing secure recording and reproduction.

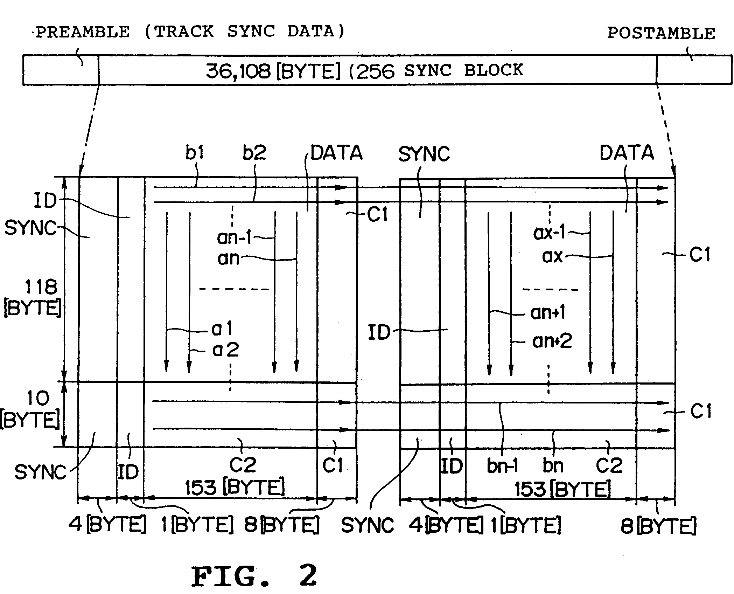

For example, as shown in Figure 2, after data DATA has been loaded in a predetermined unit (= 36,108 [BYTE]), the data recorder divides the data DATA into 306 blocks, and applies a Reed-Solomon error detecting/correcting code (C2 code) at each block.

Further, after dividing the block into a first field FIELD0 and a second field FIELD1, the data recorder applies a further Reed-Solomon error detecting/correcting code (C1 code) orthogonal to the C2 code.

Thus in the data recorder as described, a bit error rate can be enhanced by correcting erroneous reproduced data by means of the C1 and C2 codes during reproduction.

Further, when recording the data DATA with the C1 and C2 codes applied thereto on the magnetic tape 1, interleaving is effected at every recording track TR, so that where a drop-out or the like arises, the data DATA can still be reproduced securely.

That is, as shown in Figure 2, the data DATA supplied in the order indicated by arrows a1, a2, ..., an-1, an, an+1, an+2, ..., ax-1 and ax is then recorded by changing its order as indicated by arrows b1, b2, ..., bn-1 and bn, thereby interleaving the data DATA.

A synchronising signal SYNC and sync block data ID are added at every predetermined unit (hereinafter called SYNC block), and preamble and postamble data are added for recording the data DATA.

Thus during reproduction, the synchronising signal SYNC, the sync block data ID and the data DATA are reproduced on the basis of track sync data included in the preamble, and subjected to deinterleaving on the basis of the synchronising signal SYNC and the sync block data ID.

As a result of interleaving, an error exceeding the error correcting capacity of the C1 and C2 codes is prevented from concentrating at a particular point in the data even when drop-out or the like has arisen.

In the ID-1 format data recorder for reproducing desired data as described above, a bit error rate of $10^{-10}$ is achievable which is sufficient in practice for measurement purposes.

If the bit error rate could be enhanced to about $10^{-15}$, then it is conceivable that important data may be sufficiently securely stored by such a magnetic tape recorder to be used in computer system working, for example in banks or similar institutions.

According to one aspect of the invention there is provided a data recording method comprising the steps of:

recording data with block numbers assigned successively in predetermined blocks on a recording medium, and then recording predetermined final data in succession on the recording medium; and

monitoring reproduced data obtained by concurrently reproducing said recording medium;

wherein, when an error in said reproduced data is detected during recording of said predetermined final data, said data is recorded again from said block number at which the error has arisen, and then said predetermined final data is recorded again.

According to another aspect of the invention there is provided a data recording apparatus comprising:

recording means for recording data to be recorded with block numbers assigned successively in predetermined blocks on a recording medium, and then recording predetermined final data in succession on the recording medium;

monitoring means for monitoring reproduced data obtained by concurrently reproducing said recording medium; and

error detecting means for detecting an error in said reproduced data during recording of said predetermined final data and causing said recording means to record again said recording data from the block number at which the error has arisen, and then to record again said predetermined final data.

A preferred embodiment of the invention provides a tape recording method and apparatus which is capable of enhancing the bit error rate considerably.

In the preferred embodiment, this is achieved by the technique of recording data with block numbers put thereto successively in predetermined blocks, and after the recording data is recorded, predetermined final data is recorded in succession; reproduced data obtained concurrently with the recording data recorded on the recording medium is monitored, and when an error in the reproduced data is detected during recording of the predetermined final data, the recording data is again recorded from the block number at which the error has arisen, and then the predetermined final data is recorded again.

As a result of this technique, the recording data can be recorded for a final portion of the recording data without stopping operation of the recording device.

The invention will now be described by way of example with reference to the accompanying drawings, throughout which like parts are referred to by like references, and in which:

Figure 1 is a diagram of a recording format on magnetic tape according to the ID-1 standard;

Figure 2 is a diagram showing interleaving of the ID-1 format;

Figure 3 is a block diagram showing a general configuration of a computer system to which a magnetic recording method embodying the present invention may be applied;

Figures 4A and 4B are diagrams of recording areas on a magnetic tape;

Figures 5A and 5B are diagrams of a format of a recording track on the magnetic tape;

Figure 6 is a diagram showing interleaving among the recording tracks;

Figure 7 is a diagram of a track format on the magnetic tape;

Figure 8 is a block diagram of a recording format control portion;

Figure 9 is a block diagram of a reproducing format control portion;

Figure 10 is a block diagram of a write retry circuit for carrying out a magnetic recording method according to one embodiment of the present invention;

Figure 11 is a diagram showing subcode data contents of a user data track;

Figures 12A to 12C are timing charts for illustration of the magnetic recording method by the write entry circuit of Figure 10;

Figures 13A to 13G are timing charts for further illustration of the magnetic recording method by the write retry circuit of Figure 10; and

Figures 14A and 14B are diagrams of the recording tracks on the magnetic tape when a write retry is carried out.

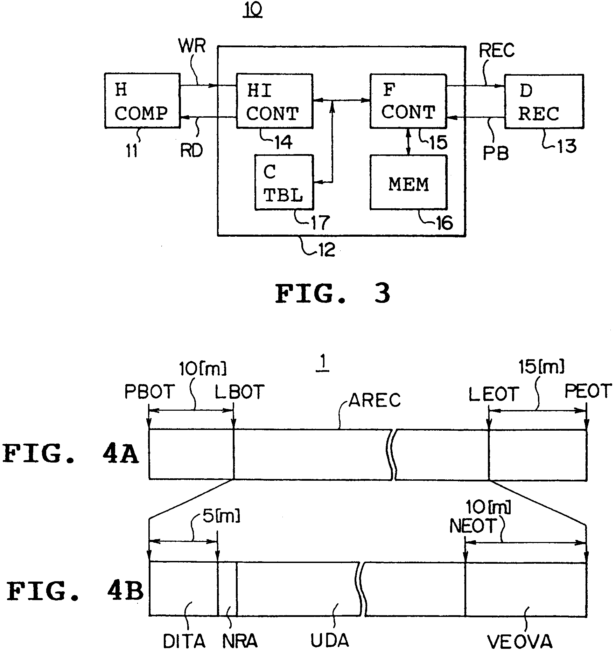

In Figure 3, there is shown a schematic construction of a computer system 10 to which the present invention may be applied, wherein write data WR sent from a host computer 11 along with a write request is supplied to a data recorder 13 of the ID-1 format as recording data REC through a data recorder control unit 12, and thus the write data WR is written in a recording track on magnetic tape in the data recorder 13.

The magnetic tape of the data recorder 13 can then be reproduced according to a read request from the host computer 11, and reproduced data PB obtained as a result is supplied to the host computer 11 as read data RD through the data recorder control unit 12.

The data recorder control unit 12 comprises a host interface control part 14 and a format control part 15, the host interface control part 14 controlling a channel interface with the host computer 11, and the format control part 15 formatting data transferred to the data recorder 13 by means of a memory 16.

Control information between the host interface control part 14 and the format control part 15 is transferred by reference to a control table 17.

Thus in the computer system 10, the data recorder control unit 12 is available for using the data recorder 13 as an external memory of the host computer 11 through the interface, in a similar manner to a conventional magnetic tape recorder associated with the host computer 11.

In the data recorder 13 of the computer system 10, as shown in Figures 4A and 4B, a longitudinally central portion of the magnetic tape 1 loaded in the data recorder 13 which is comparatively less susceptible to damage than the end portions is designated a recording area AREC, thereby enhancing the bit error rate.

That is, as shown in Figure 4A, a position 10 [m] displaced, for example, from one physical end PBOT of the magnetic tape 1 is specified as a logical end LBOT; a position 15 [m], for example, displaced from the other physical end PEOT of the magnetic tape 1 is specified as a logical end LEOT; and the area between the logical end LBOT and the logical end LEOT is intended for the recording area AREC.

In the recording area AREC, as shown in Figure 4B, an area extending from the logical end LBOT to a position 5 [m], for example, therefrom is intended for a directory information track area DITA.

Further, following the directory information track area DITA, there are, in sequence, a non-recorded area NRA, a user's recording track area UDA, and starting at a logical point NEOT, for example 10 [m] before the logical end LEOT, and extending as far as the logical end LEOT, there is a volume end information area LEOVA.

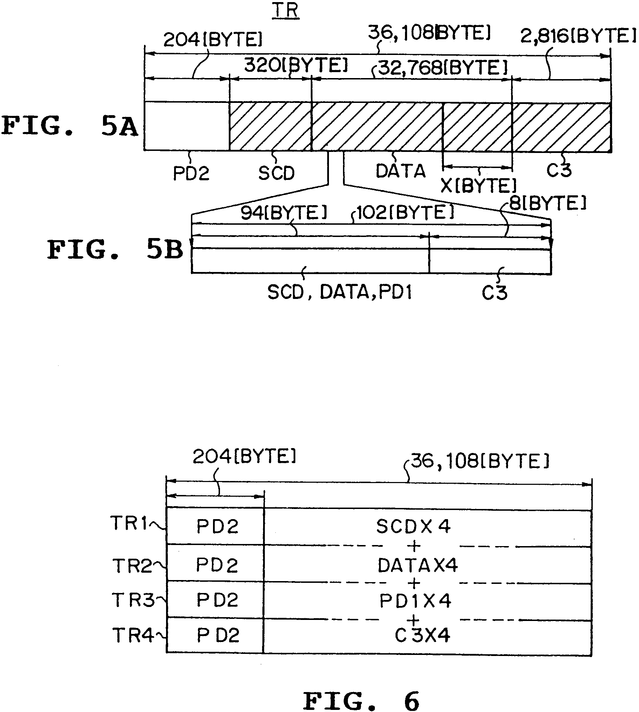

In the computer system 10, a user data area of 36,108 [BYTE] per recording track which is specified by the ID-1 format is formatted as shown in Figures 5A and 5B, and the formatted data is interleaved in 4 tracks, thereby enhancing the bit error rate.

That is, as shown in Figure 5A, the write data WR from the host computer 11 is recorded as 32,768 [BYTE] recording data DATA comprising 1 block, for example, per recording track with 4 tracks as one set.

In this case, for recording data DATA having less than 32,768 [BYTE] per recording track TR, first supplementary data PD1 is added to form 32,768 [BYTE] as a whole. Then, subcode data SCD of 320 [BYTE] is prepared for loading additional information relating to the recording track TR.

Moreover, in the data recorder control unit 12, an 8-[BYTE] Reed-Solomon error detecting/correcting code (hereinafter called the C3 code taking account of the C1 and C2 codes in the ID-1 format) is added, as shown in Figure 5A, by means of a predetermined generator polynomial; at every 94 [BYTE] of the subcode data SCD, the recording data DATA or the first supplementary data PD1, error correction can be carried out more securely thereby, and thus the bit error rate can further be enhanced

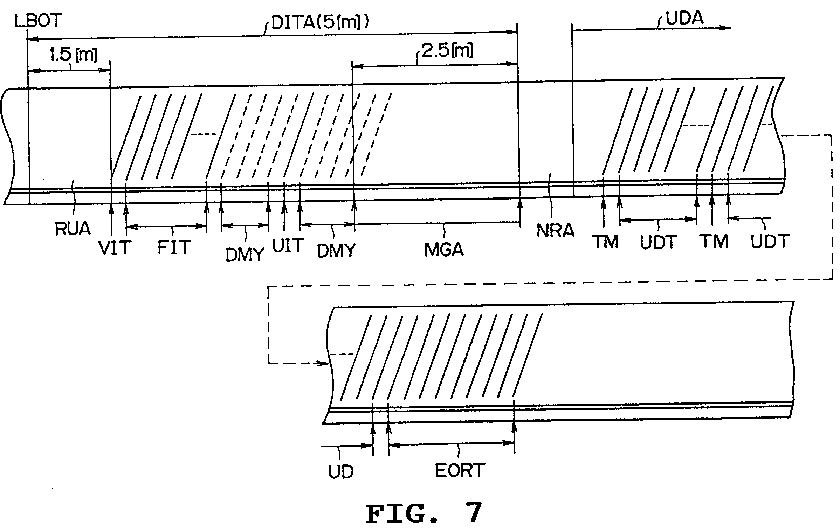

As shown in Figure 6, for the subcode SCD, the recording data DATA, the first supplementary data PD1 and the C3 code thus formatted per recording track, data for four recording tracks TR1, TR2, TR3 and TR4 is interleaved among the tracks according to a predetermined process, thereby enhancing the bit error rate further.

Second supplementary data PD2 of 204 [BYTE] is then added ahead of the data for each recording track interleaved for the four recording tracks TR1, TR2, TR3 and TR4, and thus the data content for one recording track TR amounts to 36,108 [BYTE] as specified by the ID-1 format.

As a result of formatting the second supplementary data PD2 in front of the main data as described above, the second supplementary data PD2 can be assigned to a magnetic head running-in portion of the recording tracks where the magnetic tape 1 is most susceptible to damage and tracking is not stable, thereby enhancing further the bit error rate of the recorded data DATA.

Additional information loaded in the subcode data SCD comprises track classification information TRID indicating a classification of the corresponding recording track TR, a block number BLNO to which the recording track TR belongs, a file number FLNO to which the recording track TR belongs, a write retry frequency RTCT with reference to the recording tracks and a byte count BYTC of data included in the recording tracks.

Classification information including a volume information table VIT, a file information table FIT, an update information table UIT, dummy data track information DMY or recording end information EORT is recorded in the track classification information TRID. As shown in Figure 7, the volume information table VIT, the file information table FIT, the update information table UIT or the dummy data track information DMY is used as the track classification information TRID of the recording track TR formed in the directory information track area DITA of the magnetic tape 1 first.

A directory information table DIT for managing files on the magnetic tape 1 as a whole is recorded in the directory information track area DITA, and the recording track comprising the volume information table VIT is recorded first in a set of four tracks continuously to a 1.5 [m] rise area RUA from the logical end LBOT of the magnetic tape 1.

First and final position information of the data block recorded in the user recording track area UDA with the whole magnetic tape 1 as one volume, length information of the file information table FIT and a block number of the data block wherein write retry has been executed in recording are recorded in the recording data DATA of the volume information table VIT

The file information table FIT is recorded in 256 tracks continuing after the volume information table VIT. A first position information and block length of the file are recorded in the recording data DATA of the file information table FIT in the unit of file recorded in the user recording track area UDA.

The dummy data track information DMY is recorded in succession to the file information table FIT in a predetermined track number, and the update information table UIT is recorded in the following four recording tracks. An indication of whether or not updated information is recorded in the recording data DATA is present in the update information table UIT.

In succession to the update information table UIT, dummy data track information DMY is recorded in the recording track 2.5 [m] from the end of the directory information track area DITA, and that remaining 2.5 [m] part of the directory information track area DITA is secured as a margin area MGA.

Next, user data track information UDT, tape mark track information TM or recording end information EOR is used as the track classification information TRID of the recording track TR formed in the user recording track area UDA following a non-recording area NRA in succession to the directory information track area DITA of the magnetic tape 1.

The recording track TR of the user data track information UDT for a plurality of blocks forming one file is recorded among the recording tracks TR of the tape mark track information TM with four tracks as one unit as the recording track TR of the user recording track area UDA, and the recording track TR of the recording end information EOR is recorded in succession to the last of the user data track information UDT.

Then, the first supplementary data PD1 of 32,768 [BYTE] is recorded in the recording data DATA of the tape mark track information TM and the recording end information EOR, and data corresponding to the write data WA inputted from the host computer 11 is recorded in the recording data DATA of the recording track TR of the user recording track area UDA.

Thus, in the tape configuration of the computer system 10, the directory information track area DITA is provided at the start of the magnetic tape 1, and the content of the user recording track area UDA is configured in files, so that data recorded in the data recorder 13 is accessible as from an external recording apparatus, viewed from the host computer 11.

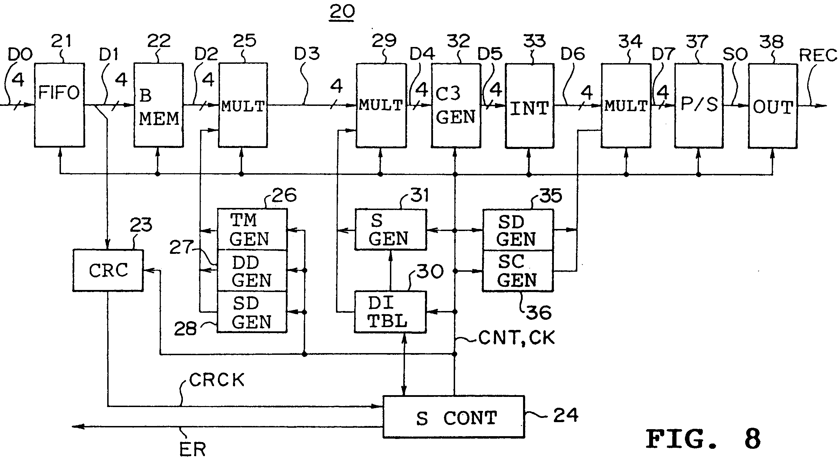

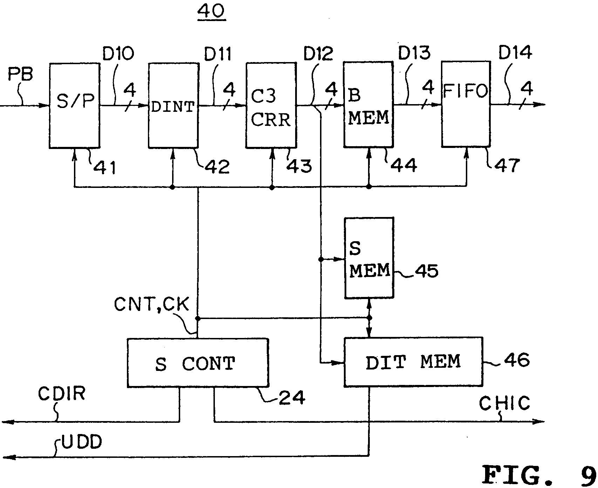

The format control part 15 of the data recorder control unit 12 in the computer system 10 comprises a recording format portion 20 and a reproducing format portion 40 as respectively shown in Figures 8 and 9.

Referring to Figure 8, in the recording format control portion 20, as a result of inputting data at every 32 bits to a memory comprising a first-in-first-out (FIFO) circuit 21 from the host interface control part 14 as 4-channel 8-bit parallel write data D0, the write data D0 is synchronised with an internal clock CK, and is then written in a buffer memory 22 as input data D1 and also sent to a cyclic redundancy code (CRC) error detection circuit 23.

In the recording format control portion 20, the write data D0 is processed for each of the four channels; however, only data in one channel will be referred to in order to simplify the description.

The CRC error detection circuit 23 carries out error detection on the input data D1 by means of a cyclic redundancy code, and supplies a detection result CRCK to a system control circuit 24 in a computer configuration including a central processing unit (CPU).

When detecting an error in the input data D1 according to the detection result CRCK of the CRC error detection circuit 23, the system control circuit 24 sends it back to the host interface control part 14 as an error detection signal ER.

As a result, the host interface control part 14 may, for example, execute resending of the write data D0 in which an error is present.

The buffer memory 22 buffers one recording track TR (as shown in Figures 5A and 5B) of the input data D1, and sends first buffer data D2 according to the recording data DATA obtained thereby to a first multiplexer 25.

In addition to the first buffer data D2, first supplementary data PD1 for the tape mark track information TM sent from a tape mark generation circuit 26, dummy data from the dummy data track information DMY sent from a dummy data generation circuit 27, and the first supplementary data PD1 to the recording data DATA sent from a supplementary data generation circuit 28 are each supplied to the first multiplexer 25.

Thus the first multiplexer 25 generates second buffer data D3 by adding the first supplementary data PD1 to the recording data DATA of the first buffer data D2 according to a control signal CNT supplied from the system control circuit 24, and sends it to a second multiplexer 29.

In addition to the second buffer data D3, the directory information table DIT sent from a directory information table memory 30, and the subcode data SCD generated in a subcode generation circuit 31 according to a content of the directory information table 30 are supplied to the second multiplexer 29.

In practice, the directory information table DIT shown in Figure 7 is stored in the directory information table memory 30, and the subcode generation circuit 31 generates first and last position information of the data block, length information of the file information table FIT and a block number of the data block having executed rewrite in recording according to a content of the directory information table DIT.

Thus the second multiplexer 25 assembles the format shown in Figures 5A and 5B by adding the subcode data SCD to the second buffer data D3 according to the control signal CNT supplied from the system control circuit 24, and then sends it to a C3 code generation circuit 32 as third buffer data D4.

The C3 code generation circuit 32 generates the C3 code of 8 [BYTE] as shown in Figures 5A and 5B, adds it to the third buffer data D4, and sends the resulting recording track data D5 to an interleaving circuit 33.

The interleaving circuit 33 executes interleaving for the four tracks shown in Figure 6 by loading the recording track data D5 for the four tracks into an interleave memory (not shown) in sequence and reading out the data in the predetermined order, and then sends the resulting second recording track data D6 to a third multiplexer 34.

In addition to the second recording track data D6, the second supplementary data PD2 sent from a second supplementary data generation circuit 35, and synchronising code data sent from a synchronising code generation circuit 36 are supplied to the third multiplexer 34.

Thus the third multiplexer 34 adds the second supplementary data PD2 and the synchronising code data to the second recording track data D6 according to the control signal CNT supplied from the system control circuit 24, and sends the resulting third recording track data D7 to a parallel-serial conversion circuit 37.

The parallel-serial conversion circuit 37 converts the 4-channel 8-bit parallel third recording track data D7 into serial recorder data S0 of 32 bits, which is supplied to the data recorder 13 as recording data REC through an output circuit 38.

Thus, the recording format control portion 20 of the format control part 15 executes formatting described with reference to Figures 5A to 7 for the write data D0 supplied from the host interface control part 14, and generates the recording data REC accordingly which is then recorded on the magnetic tape 1 according to the ID-1 format as shown in Figures 1 and 2.

Referring to Figure 9, in the reproducing format portion 40, serial reproduced data PB from the data recorder 13 is supplied to a serial-parallel conversion circuit 41, in which it is converted into 4-channel 8-bit parallel first reproduced data D10 supplied to a deinterleaving circuit 42.

The deinterleaving circuit 42 carries out deinterleaving corresponding to the interleaving of the interleaving circuit 33 (Figure 8) by loading in the first reproduced data D10 in sequence (as in the case of the interleaving circuit 33 of the recording format portion 20) and reading out the data in the predetermined order, thus forming second reproduced data D11 which is supplied to a C3 error correction circuit 43.

The C3 error correction circuit 43 carries out error correction of the second reproduced data D11 by means of the C3 code added by the C3 code generation circuit 32 of the recording format portion 20, and forms third reproduced data D12 after error correction.

That part of the third reproduced data D12 which corresponds to the user recording data track UDT (as shown in Figure 7) is supplied to a buffer memory 44, and that part which corresponds to the directory information table DIT is supplied to a subcode memory 45 and a directory information table memory 46.

In the buffer memory 44, the first supplementary data PD1 included in the third reproduced data D12 is deleted, the remaining data is supplied to a memory circuit in the form of a FIFO 47 as fourth reproduced data D13 synchronised with an external clock CK, and is then sent to the host interface control part 14 as read data D14 from the reproducing format control portion 40.

When the directory information table DIT supplied to the directory information table memory 46 is updated, the system control circuit 24 sends update information UDD of the directory information table DIT to the data recorder 13 together with a data recorder control signal CDIR, and updates the content of the directory information table DIT on the magnetic tape 1.

Further the system control circuit 24 sends back an answer to the data reproducing request from the host interface control part 14 as a control signal CHIC together with the output data D14.

Thus the reproducing format control portion 20 of the format control part 15 subjects the reproduced data PB from the data recorder 13 to formatting which is the inverse of that described with reference to Figures 5A to 7, generates the read data D14 and supplies it to the host interface control part 14.

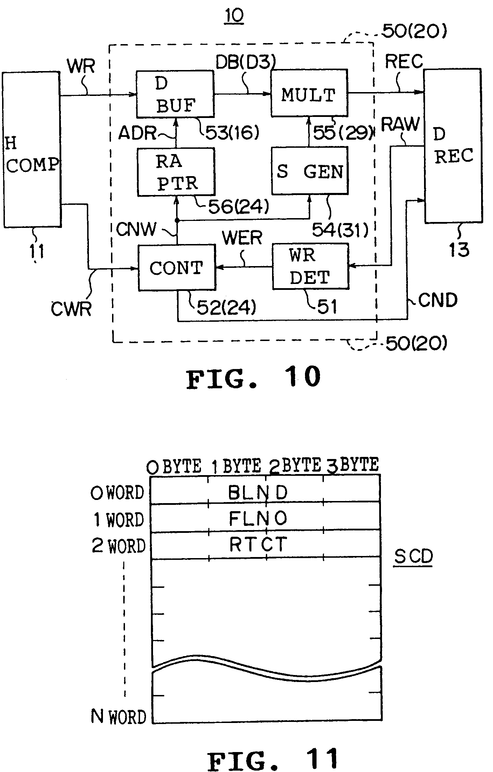

In Figure 10, which includes parts corresponding to those of Figure 3 and Figure 8, a write retry circuit 50 is included for realising a write retry method according to one embodiment of the present invention, the circuit 50 being formed by adding a write error detection circuit 51 to the above-described recording format control portion 20.

A write instruction CWR sent from the host computer 11 is supplied to the control table 17 through the host interface control part 14, interpreted by a control circuit 52 (included in the system control circuit 24) of the write retry circuit 50, and the write data WR sent thereafter is loaded in a data buffer 53 included in the memory 16.

The write data WR is transferred in a block unit, for example, of 32 [BYTE] (comprising one recording track on the magnetic tape 1) at every write instruction WR, and is loaded successively in a block memory formed within the data buffer 53.

Then, when a transfer end instruction of the write data WR is supplied from the host computer 11, the control circuit 52 computes a volume of data loaded in the data buffer 53, generates subcode data comprising the volume of data and additional information of the block to be recorded, and writes it in a memory of a subcode generation circuit 54 (31).

The write data WR thus loaded in the data buffer 53 is sent to a multiplexer 55 (29) at a timing when a forced recording instruction is supplied from the host computer 11 or at a timing when the block memory of the data buffer 53 is filled as a recording data block DB read in blocks by the control circuit 52.

When a read start address is specified from a read address pointer 56 (included in the system control circuit 24) according to a recording control signal CNW supplied from the control circuit 52, the data buffer 53 executes reading from the read start address, and a read address is incremented automatically thereafter and so read.

Further the multiplexer 55 adds the subcode data SCD generated by the subcode generation circuit 54 to the recording data block DB according to the recording control signal CNW from the control circuit 52, and applies the C3 code, as described with reference to Figure 8, to the recording data block thus obtained for interleaving.

The multiplexer 55 transfers the result obtained as described above to the data recorder 13 as recording data REC, and the data is recorded in the recording track TR on the magnetic tape 1.

In this case, the data recorder 13 is controlled so as to operate according to a data recorder control signal CND from the control circuit 52.

The subcode data SCD added to the recording data block DB has data as shown in Figure 11 added as well as user data track information UDT indicating that the recording track is a user data track as shown in Figures 5A to 7.

That is, the subcode data SCD is formed of 4 [BYTE] as one word, the block number BLNO of the recording data block DB is recorded as the first word, a file number FLNO of the recording data block DB is recorded as the second word, and the write retry frequency RTCT is recorded as the third word.

In the case of this embodiment, the data recorder 13 has a so-called read-after-write function for reproducing the recorded data REC immediately, sending the reproduced data RAW to a write error detection circuit 51 of the write retry circuit 50, detecting and correcting errors internally for the reproduced data RAW, and when there arises an error which cannot be corrected, an error detection signal is added to the reproduced data RAW.

The write error detection circuit 51 detects errors in the reproduced data RAW from the data recorder 13, and when an error is detected, or the error detection signal is added to the reproduced data RAW, it sends a recording error signal WER indicating that the error has arisen to the control circuit 52 along with the block number BLNO of the recording data block DB to write retry.

Based on the block number BLNO supplied with the recording error signal WER, the control circuit 52 then sends the recording control signal CNW for specifying the block number BLNO of the recording data block DB to start recording again for write retry processing to the read address pointer 56.

In addition, the control circuit 52 increments the write retry frequency RTCT of the subcode data SCD by one to the subcode generation circuit 54, and sends the recording control signal CNW for identifying the other subcode SCD as being before retry.

Thus in the write retry circuit 50, the write data WR loaded in the data buffer 53 is read from the recording data block DB wherein an error has arisen, and the subcode data SCD with the retry count frequency RTCT incremented by one by the multiplexer 55 likewise is added and recorded in the recording track on the magnetic tape 1, thus executing the write retry process.

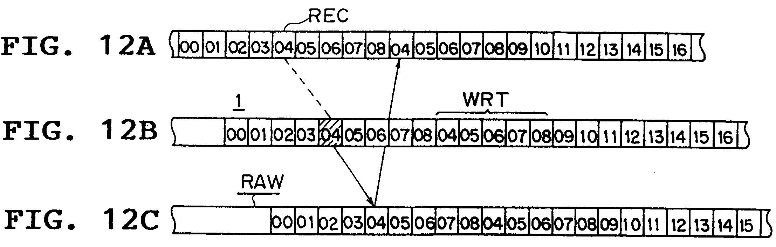

In the aforementioned configuration, when, for example, the recording data REC with the block number BLNO shown in Figure 12A added thereto is transferred to the data recorder 13, the recording track number with the block number BLNO added in sequence correspondingly to the recording data REC is formed, as shown in Figure 12B.

The data recorder 13 reproduces the recording track concurrently, and the reproduced data RAW thus obtained has the block number BLNO added in sequence as shown in Figure 12C and is sent to the write error detection circuit 51 of the write retry circuit 50.

When, for example, the write error detection circuit 51 detects an error in the reproduced data RAW with the block number "04", the write retry circuit 50 starts a write retry process from "04" of the block number BLNO, and as shown in Figure 12B, the recording track with the block number BLNO starting from "04" is formed as a write retry portion, in sequence on the magnetic tape 1 corresponding to the recording data REC.

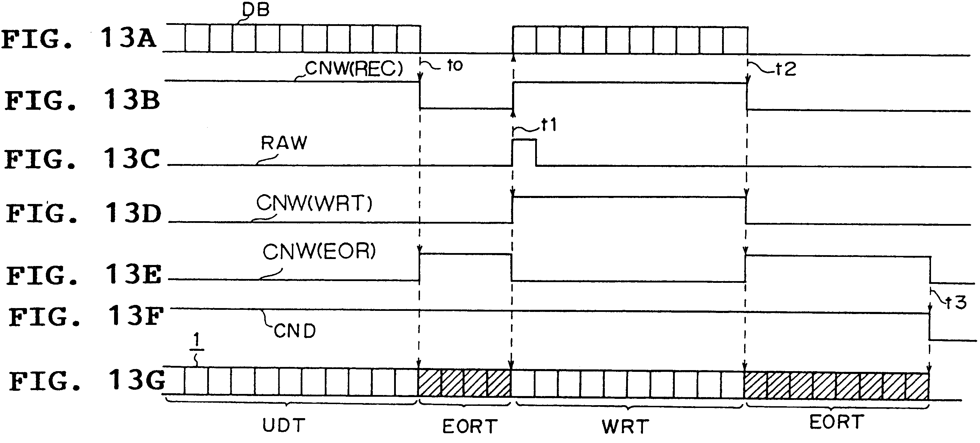

Further in the write retry circuit 50, as shown in Figures 13A to 13G, the control circuit 52 sends the recording control signal CNW (REC) (Figure 13B) for closing reading of the data buffer 53 to the read address pointer 56 at a timing whereby a recording end instruction is supplied from the host computer 11, or at a timing t0 when the recording data block (Figure 13A) to record in a block memory of the data buffer 53 has gone, reading of the recording data block thus coming to an end.

The control circuit 52 then sends the recording control signal CNW (EOR) (Figure 13E) for generating the subcode data SCD according to the recording end information EOR for predetermined data blocks (as described with reference to Figure 6) to the subcode generation circuit 54, and thus a recording end information track EORT (Figure 7 and Figure 13G) is formed for predetermined recording tracks on the magnetic tape 1 in the data recorder 13 following the user data recording track UDT according to the recording data REC.

In this state, when the write error detection circuit 51 detects an error at a timing t1 for the reproduced data RAW (Figure 13C) from the data recorder 13, the control circuit 52 sends the recording control signals CNW (REC) and (WRT) for executing the aforementioned retry process to the read address pointer 56 and the subcode generation circuit.

As a result, the recording track of the write retry portion WRT is formed on the magnetic tape 1 midway of the recording end information track EORT, and another recording end information track EORT, is again formed by an end of the data block.

When an error does not arise in the reproduced data RAW in the midst of recording of the recording end information track EORT for predetermined blocks, the control circuit 52 closes recording of the recording end information track EORT at a timing t3, and sends the data recorder control signal CND to the data recorder 13 at the same time, thereby stopping the data recorder 13.

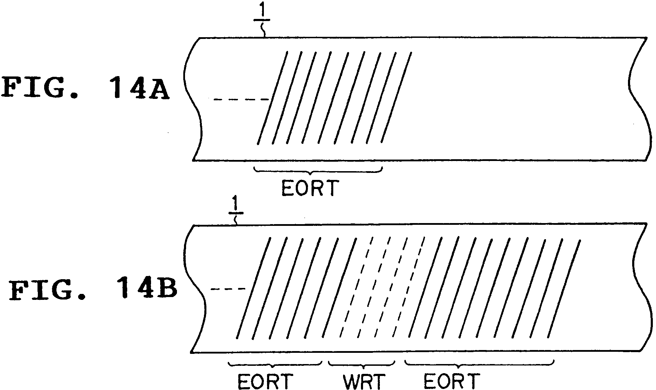

Thus, when a write error arises at the time of recording end to a write retry process, as shown in Figure 14B, the recording track of the write retry portion WRT is formed midway of the recording end information track EORT as compared with the case where the recording end information track EORT is recorded in a predetermined number up to a normal end, as shown in Figure 14A, and then the recording end information track EORT of the predetermined number is formed again.

According to the method described above, when a recording error is detected in the reproduced data RAW which is reproduced concurrently while the recording end information track EORT is recorded, a recording is recommenced from the data block in which the recording error has arisen, and then the recording end information track EORT is recorded; therefore a write retry method capable of executing write retry at high speed without stopping the data recorder 13 for the recording end portion may be realised.

Further, according to this method, since the write retry process is realised without stopping the data recorder 13 and rewinding the magnetic tape 1, damage of the magnetic tape 1 during a retry operation can be prevented.

Also, since the write retry process is realised without stopping the data recorder 13 and rewinding the magnetic tape 1, a reliable write retry process may be realised even in such magnetic recording apparatus which is not provided with a high-speed stop and rewind function.

Thus, the bit error rate may be significantly enhanced and an optimal data recorder may be realised as an external recording apparatus of the host computer system 11.

In the above-described embodiment, the arrangement is such that data at every four tracks is subjected to interleaving; however, the present invention is not limited thereto, and thus, for example, data at eight tracks may instead be subjected to interleaving.

In the above-described embodiment, while the frequency of the write retry process carried out by the write retry circuit is not particularly limited, a limit of, for example, ten times or so may be provided in practice, and in case the write retry frequency in the subcode data exceeds the limit, a message such as "unable to record" or the like may be applied to the recording data and so transmitted to the host computer.

Further, the above description has referred to the case in which the present invention is applied to an external memory of a computer; however, the present invention is not necessarily limited thereto, and is applicable extensively to a variety of magnetic recording and reproducing apparatus.

As described above, recording data is recorded with a block number applied thereto successively in predetermined blocks and when an error in the reproduced data obtained concurrently with the recording is detected while predetermined final data in succession to the recording data is being recorded, the recording data is recorded again from the block number in which the error has arisen, and then the predetermined final data is recorded, thus realising a magnetic recording method capable of re-recording the recording data for the end portion of the recording data without stopping operation of the recording medium.

## Claims

1. A data recording method comprising the steps of:
   recording data (REC) with block numbers (BLNO) assigned successively in predetermined blocks (DB) on a recording medium (1), and then recording predetermined final data (EORT) in succession on the recording medium (1); and
   monitoring reproduced data (RAW) obtained by concurrently reproducing said recording medium (1);
   wherein, when an error in said reproduced data (RAW) is detected during recording of said predetermined final data (EORT), said data (REC) is recorded again from said block number (BLNO) at which the error has arisen, and then said predetermined final data (EORT) is recorded again.

2. A method according to claim 1, wherein said recorded data (REC) and said final data (EORT) are recorded on a magnetic tape (1) by means of a magnetic rotary head.

3. A method according to claim 1 or claim 2, wherein said reproduced data (RAW) is internally error detectable and correctable, and when there arises an error which cannot be corrected, a recording error signal (WER) indicating that the error has arisen is generated along with the block number (BLNO) of the recording data block (DB) and said final data (EORT) are recorded again on the basis of said recording error signal (WER) and said block number (BLNO) of the recording data block (DB).

4. A data recording apparatus comprising:
   recording means (13, 20) for recording data (REC) to be recorded with block numbers (BLNO) assigned successively in predetermined blocks (DB) on a recording medium (1), and then recording predetermined final data (EORT) in succession on the recording medium (1);
   monitoring means (40) for monitoring reproduced data (RAW) obtained by concurrently reproducing said recording medium (1); and
   error detecting means (51) for detecting an error in said reproduced data (RAW) during recording of said predetermined final data (EORT) and causing said recording means (13, 20) to record again said recording data (REC) from the block number (BLNO) at which the error has arisen, and then to record again said predetermined final data (EORT).

5. Apparatus according to claim 4, wherein said recording means (13, 20) has a magnetic rotary head for recording said recording data (REC) and said final data (EORT) on a magnetic tape (1).

6. Apparatus according to claim 4 or claim 5, comprising:

means (51) for internally detecting and correcting errors in said reproduced data (RAW); and

means (24) for generating a recording error signal (WER) indicating that the error has arisen along with the block number (BLNO) of the recording data block (DB) to write retry thereby causing said recording means (13, 20) to record said recording data (REC) and said final data (EORT) on the basis of said recording error signal (WER) and said block number (BLNO) of the recording data block (DB).

EP 0 505 127 A2

FIG. 1

FIG. 2

**FIG. 3**

**FIG. 4A**

**FIG. 4B**

FIG. 5A

FIG. 5B

FIG. 6

FIG. 7

FIG. 8

FIG. 9

<u>10</u>

FIG. 10

FIG. 11

EP 0 505 127 A2

FIG. 12A

REC

| 00 | 01 | 02 | 03 | 04 | 05 | 06 | 07 | 08 | 04 | 05 | 06 | 07 | 08 | 09 | 10 | 11 | 12 | 13 | 14 | 15 | 16 |

FIG. 12B

1

WRT

| 00 | 01 | 02 | 03 | 04 | 05 | 06 | 07 | 08 | 04 | 05 | 06 | 07 | 08 | 09 | 10 | 11 | 12 | 13 | 14 | 15 | 16 |

FIG. 12C

RAW

| 00 | 01 | 02 | 03 | 04 | 05 | 06 | 07 | 08 | 04 | 05 | 06 | 07 | 08 | 09 | 10 | 11 | 12 | 13 | 14 | 15 |

FIG. 13A  DB

FIG. 13B  CNW(REC)  t0  t2

FIG. 13C  RAW  t1

FIG. 13D  CNW(WRT)

FIG. 13E  CNW(EOR)

FIG. 13F  CND  t3

FIG. 13G  1  UDT  EORT  WRT  EORT

FIG. 14A

EORT

FIG. 14B

EORT    WRT    EORT